(19) Europäisches Patentamt
European Patent Office
Office européen des brevets

(11) **EP 2 255 475 B1**

(12) **FASCICULE DE BREVET EUROPEEN**

(45) Date de publication et mention
de la délivrance du brevet:
**20.11.2013 Bulletin 2013/47**

(21) Numéro de dépôt: **09720671.8**

(22) Date de dépôt: **27.02.2009**

(51) Int Cl.:
**H04L 1/06** (2006.01)     **H04L 1/00** (2006.01)
**H04L 27/26** (2006.01)     **H04L 27/20** (2006.01)

(86) Numéro de dépôt international:
**PCT/FR2009/050316**

(87) Numéro de publication internationale:
**WO 2009/112773 (17.09.2009 Gazette 2009/38)**

(54) **PROCEDE DE TRANSMISSION DE SIGNAUX MULTI-PORTEUSES DANS UN SYSTEME MULTI-ANTENNES**

VERFAHREN ZUR ÜBERTRAGUNG VON MEHRTRÄGERSIGNALEN IN EINEM MEHRANTENNENSYSTEM

METHOD FOR TRANSMITTING MULTI-CARRIER SIGNALS IN A MULTI-ANTENNA SYSTEM

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **29.02.2008 FR 0851334**

(43) Date de publication de la demande:
**01.12.2010 Bulletin 2010/48**

(73) Titulaire: **Orange**
**75015 Paris (FR)**

(72) Inventeur: **JAVAUDIN, Jean-Philippe**
**F-35000 Rennes (FR)**

(74) Mandataire: **Jeune, Pascale et al**
**Orange**
**FT/OLNC/OLPS/IPL/PAT**
**38-40, rue du Général Leclerc**
**92794 Issy-Les-Moulineaux Cedex 9 (FR)**

(56) Documents cités:
**US-A1- 2003 086 479**

• **EL TABACH M ET AL: "Spatial Data Multiplexing Over OFDM/OQAM Modulations" IEEE INTERNATIONAL CONFERENCE ON COMMUNICATIONS, 2007 - ICC '07, 24 juin 2007 (2007-06-24), - 28 juin 2007 (2007-06-28) pages 4201-4206, XP031126326 ISBN: 978-1-4244-0353-0**

• **CHIH-HUNG KUO ET AL: "Robust video transmission over wideband wireless channel using space-time coded OFDM systems" CONFERENCE PROCEEDINGS OF IEEE WIRELESS COMMUNICATIONS AND NETWORKING CONFERENCE 2002 - WCNC2002, vol. 2, 17 mars 2002 (2002-03-17), pages 931-936, XP010585721 NJ, USA ISBN: 978-0-7803-7376-1**

• **YUE WANG ET AL: "An Adaptive UEP_BTC_ STBC_OFDM System for Robust Video Transmission" IEEE 7TH WORKSHOP ON MULTIMEDIA SIGNAL PROCESSING 2005, 1 octobre 2005 (2005-10-01), pages 1-4, XP031018257 ISBN: 978-0-7803-9288-5**

• **KUN ZHONG ET AL: "Full-Rate Orthogonal Space-Time Block Code With Pulse-Shaped Offset QAM for Four Transmit Antennas" IEEE TRANSACTIONS ON WIRELESS COMMUNICATIONS, vol. 6, no. 4, 1 avril 2007 (2007-04-01), pages 1551-1559, XP011177146 NJ, US ISSN: 1536-1276**

• **SABIR M F ET AL: "An unequal error protection scheme for multiple input multiple output systems" CONFERENCE RECORD OF THE 36TH. ASILOMAR CONFERENCE ON SIGNALS, SYSTEMS, & COMPUTERS 2002, vol. 1, 3 novembre 2002 (2002-11-03), - 6 novembre 2002 (2002-11-06) pages 575-579, XP010638271 NY, US ISBN: 978-0-7803-7576-5**

• KUHN M ET AL: "Linear scalable space-time codes: tradeoff between spatial multiplexing and transmit diversity" 4TH IEEE WORKSHOP ON SIGNAL PROCESSING ADVANCES IN WIRELESS COMMUNICATIONS - SPAWC 2003, 15 juin 2003 (2003-06-15), - 18 juin 2003 (2003-06-18) pages 21-25, XP010713460 NJ, USA ISBN: 978-0-7803-7858-2

**Description**

**1. Domaine de l'invention**

La présente invention se rapporte au domaine des télécommunications. Au sein de ce domaine, l'invention se rapporte plus particulièrement aux communications dites numériques. Les communications numériques comprennent en particulier les communications sans fil par voie hertzienne ainsi que les communications filaires. Le support de transmission des communications est couramment appelé canal de transmission ou de propagation, à l'origine en référence à un canal aérien et par extension en référence à tout canal.

L'invention concerne l'émission et la réception dans un système multi-antennes, en particulier de type MIMO ("Multiple Input Multiple Output "pour " Entrées Multiples Sorties Multiples") ou MISO ("Multiple Input Single Output" pour "Entrées Multiples Sortie Unique") mettant en oeuvre des porteuses multiples [mettant en oeuvre une matrice de précodage]. Dans un système à plusieurs antennes d'émission ou de réception, il y a autant de canaux de transmission que de paires d'antennes émission-réception. L'invention s'applique aux systèmes multi-antennes multi porteuses mettant en oeuvre au moins deux antennes d'émission et au moins une antenne de réception, que ce soit pour de la diffusion d'informations ou pour des communications.

L'invention peut s'appliquer aux communications sur voie montante (d'un terminal vers une station de base), ainsi qu'aux communications sur voie descendante (d'une station de base vers un terminal).

Un exemple d'application de l'invention est le domaine des communications fixes ou radio mobiles, notamment pour les systèmes DVB-T, pour les systèmes de quatrième génération et suivantes typiquement dits B3G (acronyme de Beyond $3^{rd}$ Generation). Ces systèmes comprennent en particulier les systèmes MC-CDMA ("Multi-Carrier Coded Division Multiple Access"), OFDMA ("Orthogonal Frequency Division Multiple Access") en voie descendante ou montante avec un schéma de transmission de type MIMO ("Multiple Input Multiple Output"), dans lesquels les données à transmettre sont réparties dans des trames temps-fréquence. L'invention s'applique en particulier à tout type de système avec modulation OFDM par exemple de type OFDMA, LP-OFDM, ou à des systèmes de type IFDMA.

L'invention concerne plus particulièrement une technique d'émission et une technique de réception d'un signal multi porteuses de type OFDM permettant d'exploiter au mieux la diversité spatiale et la capacité de transmission d'un système multi-antennes.

**2. Art antérieur**

On connaît à ce jour plusieurs types de modulations multi porteuses de type OFDM.

Parmi celles-ci, la technique de modulation la plus classique comporte un système d'égalisation particulièrement simple, basé sur l'insertion d'un intervalle de garde. Cet intervalle de garde, encore appelé préfixe cyclique, assure un bon comportement face aux échos, au prix d'une perte en efficacité spectrale.

En effet, pendant cet intervalle de garde, on ne transmet pas d'information utile, de manière à garantir que toutes les informations reçues proviennent d'un même symbole multi porteuses. On combat ainsi efficacement des phénomènes d'échos dus d'une part à l'effet Doppler et d'autre part aux trajets multiples lors de la propagation qui se traduisent à la réception par de l'IES ("Interférence Entre Symboles", ou en anglais ISI).

Dans le cas d'un système à plusieurs antennes à l'émission, les interférences observées à la réception ont en outre pour origine la présence de plusieurs signaux émis simultanément par les différentes antennes d'émission qui induisent une interférence dite entre antennes ou spatiale.

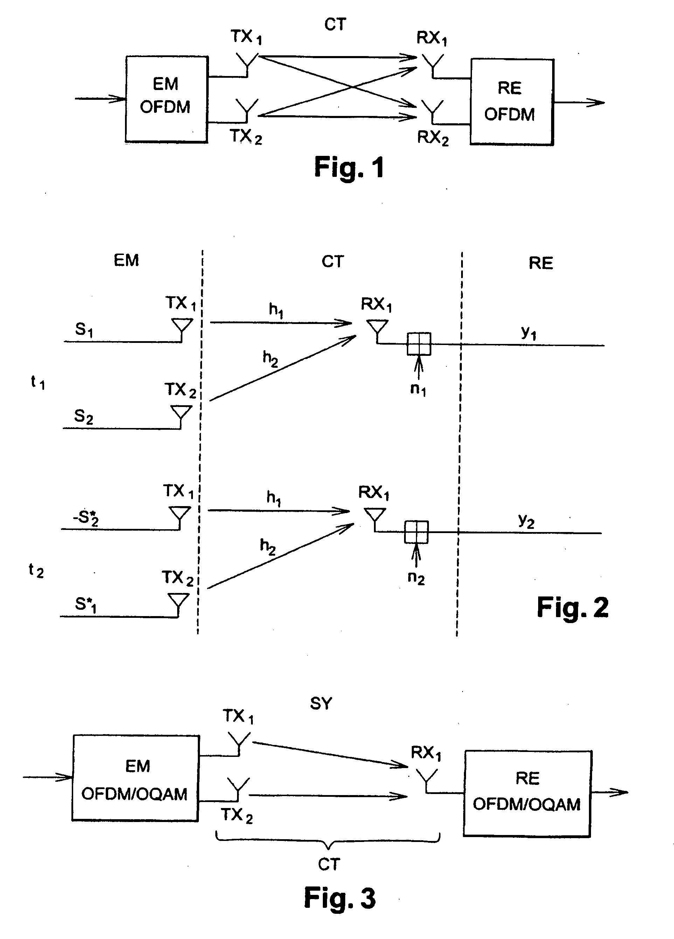

Les systèmes d'émission/réception comprenant de multiples antennes sont déjà bien connus. Un tel système est représenté de manière schématique à la figure 1. Le système comporte un émetteur EM, au moins deux antennes d'émission $TX_1$, $TX_2$, une ou plusieurs antennes de réception $RX_1$, $RX_2$ et un récepteur RE. Les signaux rayonnés par une antenne d'émission sont transmis aux antennes de réception par le canal de propagation CT. Par simplification, le canal de propagation englobe souvent les antennes d'émission et de réception. Certains de ces systèmes utilisent un codage spatial, un codage espace-temps ou espace-fréquence associé à une modulation multi porteuse en particulier de type OFDM qui permet d'exploiter la diversité spatio-temporelle de ces systèmes.

Les premiers systèmes proposés utilisaient tous des codes espace-temps en blocs orthogonaux. Ainsi, Alamouti, dans "A Simple Transmit Diversity Technique for Wireless Communications", IEEE J. Sel. Areas Comm., 1998, 16, (8), pp. 1451-1458, a présenté le premier système utilisant un code espace-temps en blocs orthogonal à rendement de 1 (où le rendement est défini comme le rapport entre le nombre N de symboles de données différents émis et le nombre L de temps symboles multi porteuses pendant lequel ils sont émis), pour deux antennes d'émission. Un symbole de données désigne couramment la sortie d'un module de transformation qui met en forme l'information à transmettre selon une constellation donnée (QPSK, QAM,...). Un symbole multi porteuses représente le multiplexage par un multiplexeur multi porteuses, communément appelé multiplex OFDM, qui consiste à répartir les symboles de données sur les sous porteuses du multiplexeur et à effectuer la somme pondérée des symboles de données par des coefficients de Fourier.

Cette sommation pondérée est effectuée au moyen d'une transformée de Fourier inverse. Il est courant que certaines sous porteuses soient réservées pour des symboles particuliers tels des pilotes. Le terme symbole est utilisé dans la suite du document pour désigner les différents types de symboles et en particulier les symboles de données et les symboles pilotes.

Dans le cas d'une modulation OFDM, on fait couramment l'hypothèse que le canal est plat sur chaque sous porteuse. Mis à part l'introduction de bruit, ceci équivaut à dire que l'effet du canal de propagation se traduit sur chaque symbole transmis sur une sous-porteuse, à un temps symbole OFDM donné, par la multiplication par un simple coefficient complexe.

La figure 2 illustre un codage espace-temps selon un schéma d'Alamouti pour deux antennes d'émission $TX_1$, $TX_2$ et une antenne de réception $RX_1$. Dans ce cas, Q=2 symboles $S_1$, $S_2$ indépendants sont codés pendant un temps égal à deux durées symbole OFDM.

Le principe de S. Alamouti est de créer un schéma de codage assurant en réception un découplage des symboles transmis et permettant ainsi un décodage à maximum de vraisemblance linéaire. Le motif orthogonal de codage s'exprime par la matrice C :

$$C = \begin{pmatrix} s_1 & s_2 \\ -s_2^* & s_1^* \end{pmatrix} \tag{1}$$

En référence à la figure 2 et en supposant que le canal ne varie pas sur au moins un temps symbole OFDM, les équations en entrée du récepteur sont :

$$\text{à l'instant } t_1 : y_1 = h_1 s_1 + h_2 s_2 + n_1, \tag{2}$$

$$\text{à l'instant } t_2 : y_2 = -h_1 s_2^* + h_2 s_1^* + n_2, \tag{3}$$

avec $t_2 = t_1 + T$, T étant la durée d'un symbole OFDM, avec $n_1$, $n_2$ le bruit introduit par le canal de propagation CT respectivement aux temps $t_1$ et $t_2$, $h_1$, $h_2$ les coefficients respectifs des sous canaux de propagation des antennes d'émission $TX_1$ et $TX_2$ vers l'antenne de réception $RX_1$ supposés constants sur au moins la durée T d'un symbole OFDM.

Ces équations peuvent être exprimées sous forme matricielle :

$$\begin{pmatrix} y_1 \\ y_2 \end{pmatrix} = \begin{pmatrix} s_1 & s_2 \\ -s_2^* & s_1^* \end{pmatrix} \begin{pmatrix} h_1 \\ h_2 \end{pmatrix} + \begin{pmatrix} n_1 \\ n_2 \end{pmatrix} = C\vec{h} + \vec{b}$$

$$\text{avec: } \vec{h} = \begin{pmatrix} h_1 \\ h_2 \end{pmatrix}, \text{ et } \vec{b} = \begin{pmatrix} n_1 \\ n_2 \end{pmatrix} \tag{4}$$

La matrice du code $C$ vérifie la condition d'orthogonalité suivante :

$$C^H C = \sum_{i=1}^{Q=2} |s_i^2| \, I_2 \tag{5}$$

Avec $I_2$ la matrice identité de dimension deux.

En réception, les signaux reçus $y_1$ et $y_2$ peuvent être exprimés sous la forme suivante qui traduit l'effet du canal sur la transmission des signaux émis selon un schéma d'Alamouti avec comme hypothèse que le canal est constant sur au moins un temps symbole OFDM :

4

$$\vec{y} = \begin{pmatrix} y_1 \\ y_2^* \end{pmatrix} = \begin{pmatrix} h_1 & h_2 \\ -h_2^* & h_1^* \end{pmatrix} \begin{pmatrix} s_1 \\ s_2 \end{pmatrix} + \begin{pmatrix} n_1 \\ n_2^* \end{pmatrix} = H\vec{s} + \vec{n}$$

$$\text{avec} : H = \begin{pmatrix} h_1 & h_2 \\ -h_2^* & h_1^* \end{pmatrix}, \vec{s} = \begin{pmatrix} s_1 \\ s_2 \end{pmatrix}, \text{ et } \vec{n} = \begin{pmatrix} n_1 \\ n_2^* \end{pmatrix} \qquad (6)$$

avec $h_i$ les coefficients du canal de propagation et * l'opérateur "conjugué".

Les relations (6) respectent bien la relation :

$$HH^H = \|h\|^2 I_2 = \left( |h_1|^2 + |h_2|^2 \right) I_2 \qquad (7)$$

avec $^H$ l'opérateur "hermitien".

Le décodage consiste simplement à multiplier le vecteur équivalent reçu $\vec{y}$ par la matrice $H^H$. Le vecteur en sortie s'écrit:

$$\vec{\tilde{y}} = H^H \vec{y} = H^H \left( H\vec{s} + \vec{n} \right) = \|h\|^2 \vec{s} + \vec{\tilde{n}} \qquad (8)$$

Les symboles $s_1$ et $s_2$ peuvent donc être décodés en utilisant deux détecteurs à seuil qui satisfont le critère optimal de décision de maximum de vraisemblance ML.

La modulation OFDM/OQAM ("Orthogonal Frequency Division Multiplexing/Offset Quadrature Amplitude Modulation") est une alternative à cette modulation OFDM classique et a été conçue pour éviter la perte en efficacité spectrale due à l'introduction d'un intervalle de garde. Ce type de modulation est décrit dans l'article : El Tabach h et al : "Spatial data multiplexing over OFDM/OQAM modulations".

Plus précisément, la modulation OFDM/OQAM ne nécessite pas la présence d'un intervalle de garde, ou d'un préfixe cyclique, grâce à un choix judicieux de la fonction prototype modulant chacune des porteuses du signal qui permet de bien localiser chacune des porteuses dans l'espace temps-fréquence. Pour exemple de fonction prototype, on peut citer la fonction Iota, décrite en particulier dans la demande de brevet FR 2 733 869, qui a pour caractéristique d'être identique à sa transformée de Fourier.

Pour lutter contre les interférences, la démarche normale consiste à appliquer le schéma d'Alamouti pour une modulation OFDM/OQAM. Selon ce type de modulation, les symboles émis $a_{m,n}$ sur une porteuse m à un instant n sont des réels et la matrice de codage peut s'exprimer sous la forme :

$$C = \begin{pmatrix} a_{m,n} & a_{m,n+1} \\ -a_{m,n+1} & a_{m,n} \end{pmatrix} \qquad (9)$$

La formulation précédente peut s'exprimer de manière concise sous la forme :

$$C = \begin{pmatrix} a_1 & a_2 \\ -a_2 & a_1 \end{pmatrix} \qquad (10)$$

Dans le cas d'une modulation OFDM/OQAM, le récepteur reçoit les symboles $a_i$ déphasés par les coefficients de canal auxquels s'ajoute une interférence intrinsèque $I_i$ due à l'orthogonalité réelle. Même en supposant une estimation de canal parfaite, il n'est donc à priori pas possible de récupérer les symboles transmis en utilisant une seule antenne de réception. En faisant abstraction du bruit, les symboles reçus après démodulation sur une porteuse m aux instants

respectifs t'$_1$ et t'$_2$ avec t'$_2$=t'$_1$+T peuvent s'exprimer sous la forme suivante :

$$r_1 = h_1 a_1 + I_1(a_1) + h_2 a_2 + I_1(a_2) \qquad (11)$$

$$r_2 = h_2 a_1 + I_2(a_1) - h_1 a_2 + I_2(a_2) \qquad (12)$$

équations dans lesquelles I$_1$(a$_i$) est l'interférence intrinsèque affectant le symbole a$_i$ à l'instant t'$_1$, interférence qui dépend des symboles voisins entourant a$_i$ à l'instant t'$_1$ et I$_2$(a$_i$) est l'interférence intrinsèque affectant le symbole a$_i$ à l'instant t'$_2$, interférence qui dépend des symboles voisins entourant a$_i$ à l'instant t'$_2$. L'interférence I$_i$ comprend les effets d'interférence due à l'émission de signaux simultanément sur plusieurs antennes, elle comprend donc l'interférence spatiale. Malgré l'orthogonalité (ou la quasi orthogonalité) qui existe entre un symbole et son interférence intrinsèque et malgré une connaissance du canal supposée parfaite, il n'est pas possible de résoudre ce système d'équations en suivant la même démarche qu'en OFDM classique. En effet, ce système comprend deux équations avec six inconnues, les deux symboles émis a$_1$, a$_2$ et les quatre termes d'interférences I$_1$(a$_1$), I$_1$(a$_2$), I$_2$(a$_1$), I$_2$(a$_2$).

Contrairement à une transmission OFDM classique avec un schéma d'Alamouti, une transmission OFDM/ OQAM avec un codage espace temps réel génère par construction à la réception des interférences relative à un instant d'émission qui rendent impossible le traitement des interférences entre deux instant d'émission successifs. En effet, il n'est pas envisageable de supposer que les interférences $I_1(a_1)$ et $I_1(a_2)$ sont respectivement égales à $I_2(a_1)$ et $I_2(a_2)$ car :

- l'interférence intrinsèque $I_1(a_i)$($i$=1,2) dépend des symboles voisins (dans le plan temps-fréquence) entourant a$_i$ à l'instant t'$_1$,
- l'interférence intrinsèque $I_2(a_i)$($i$=1,2) dépend des symboles voisins (dans le plan temps-fréquence) entourant a$_i$ à l'instant t'$_2$,
- et les voisins de a$_i$ à t'$_1$ sont différents des voisins de a$_i$ à l'instant t'$_2$.

Par conséquent, pour $i$=1,2 $I_1(a_i) \neq I_2(a_i)$.

En outre, des simulations ont permis de vérifier que la variance de l'interférence intrinsèque est égale à la variance des symboles réels. En considérant toutes ces interférences comme du bruit, le niveau global du bruit augmente énormément, et il n'est pas possible d'obtenir un taux d'erreur binaire T$_{cb}$ acceptable.

Par conséquent, dans le cas d'une modulation OFDM/OQAM il n'est pas possible d'utiliser un schéma d'Alamouti à l'émission pour lutter contre les interférences à la réception.

### 3. Exposé de l'invention

L'invention a notamment pour objectif de proposer un schéma d'émission qui permette de lutter contre les interférences à la réception dans le cas d'une modulation OFDM/OQAM pour un système à au moins deux antennes à l'émission.

Cet objectif, ainsi que d'autres qui apparaîtront par la suite, sont atteints à l'aide d'un procédé d'émission d'un signal multi porteuses destiné à être mis en oeuvre par un système à N$_1$ antennes d'émission, où Nt est supérieur ou égal à deux, Nr antennes de réception, où Nr est supérieur ou égal à un, du type mettant en oeuvre une répartition de symboles avant émission suivant un plan temps fréquence et mettant en oeuvre une modulation OFDM/OQAM, dans lequel la répartition des symboles est effectuée sur des blocs de taille déterminée n$_t$.n$_f$ avec n$_t$≥3 et n$_f$≥3. Le procédé comprend un codage espace temps de type réel par un codeur espace temps de matrice de codage $Nt \times N$ et de rendement Nc/N déterminés pour générer Nt séquences codées de N blocs de symboles d'une séquence d'entrée de Nc blocs de symboles.

L'invention a en outre pour objet un émetteur adapté pour mettre en oeuvre un procédé d'émission selon l'invention. L'émetteur comprend un codeur espace temps de type réel de matrice de codage $Nt \times N$ et de rendement Nc/N déterminés adapté pour répartir des symboles sur des blocs de taille déterminée n$_t$.n$_f$ avec n$_t$≥3 et n$_f$≥3 pour générer Nt séquences codées de N blocs de symboles d'une séquence d'entrée de Nc blocs de symboles.

Ainsi, le procédé et l'émetteur conformes à l'invention effectuent un codage espace temps par bloc de blocs d'au moins trois symboles contrairement aux techniques connues qui font du codage espace temps par bloc de symboles.

Le procédé ainsi que l'émetteur conformes à l'invention résolvent le problème posé. En effet, en effectuant le codage espace temps réel sur une séquence de blocs temps fréquence de symboles d'au moins trois symboles sur les deux dimensions temporelle et fréquentielle et non plus sur un bloc de deux symboles, ceci permet de garder les mêmes voisins pour les symboles à l'intérieur d'un bloc entre deux blocs successifs d'une séquence. Les symboles à l'intérieur d'un bloc sont tous les symboles répartis dans le plan temps fréquence d'un bloc sauf ceux répartis sur la 1$^{ère}$ et la dernière colonnes et sauf ceux répartis sur la 1$^{ère}$ et la dernière lignes du bloc.

Pour les symboles $a_i$ à l'intérieur d'un bloc, les interférences $I_1 (a_1)$ et $I_1(a_2)$ sont respectivement égales à $I_2 (a_1)$ et $I_2(a_2)$ car les voisins de $a_i$ à l'instant t'$_1$ sont les mêmes que les voisins de $a_i$ à l'instant t'$_2$ : pour i=1,2 $I_1 (a_i) = I_2 (a_i)$.

La taille maximale des blocs est celle qui permet d'obtenir un taux d'erreur binaire le plus faible. La taille maximale dépend du canal de propagation. Pour obtenir des résultats corrects, la taille est telle que le canal de propagation est invariant sur une durée ou une largeur de bande au moins égale à celle d'un bloc.

Dans le cas d'un codage espace temps de type Alamouti effectué sur une séquence de deux blocs successifs en temps, la taille d'un bloc selon l'axe des temps est choisie telle que le canal de propagation est invariant sur la durée temporelle d'au moins un bloc. Dans ce cas, la taille des blocs dépend pour la dimension selon l'axe des temps du temps de cohérence du canal de propagation.

Dans le cas d'un codage espace temps effectué sur une séquence de deux blocs successifs en fréquence, codage désigné parfois par les termes espace fréquence, la taille d'un bloc selon l'axe des fréquences est choisie telle que le canal de propagation est invariant sur la largeur de bande fréquentielle d'au moins un bloc. Dans ce cas, la taille des blocs dépend pour la dimension selon l'axe des fréquences de la bande de cohérence du canal de propagation.

Selon un mode de réalisation particulier, le procédé comprend un codage de canal et les données à transmettre sont séparées avant codage de canal (dit par fois correcteur d'erreur) en deux flux distincts. Les données des deux flux sont codées par un codeur canal en utilisant des codes de rendement respectif différent pour chacun des flux. Le codeur peut consister en deux codeurs élémentaires utilisant le même code mais associé à un poinçonnage différent entre les deux codeurs élémentaires. Le codeur peut aussi consister en deux codeurs élémentaires utilisant des codes différents ayant un rendement différent. Les symboles sont répartis selon ce mode sur les blocs en réservant au moins les premier et dernier temps symbole OFDM d'un bloc aux symboles correspondant aux données préalablement codées avec le code à rendement le plus faible. Les symboles répartis en bord de blocs ne bénéficiant pas des mêmes voisins après le codage espace temps, l'utilisation d'un code avec un rendement plus faible pour ces symboles permet de pallier l'absence d'effet du traitement par bloc de blocs temps fréquence selon l'invention pour ces symboles pour lutter contre les effets d'interférences. Ce mode permet donc d'augmenter l'efficacité du procédé selon l'invention.

Selon ce mode, une répartition des flux suivant l'axe temporel est typiquement associé à un codage espace temps effectué sur une séquence de deux blocs B1, B2 successifs en temps. Dans ce cas, la taille d'un bloc selon cet axe temporel doit être telle que les coefficients du canal de propagation puissent être considérés comme constants sur au moins la durée temporelle d'un bloc. Une répartition des flux suivant l'axe fréquentiel est typiquement associé à un codage espace temps effectué sur une séquence de deux blocs B1, B2 successifs en fréquence. Dans ce cas, la taille d'un bloc selon cet axe fréquentiel doit être telle que les coefficients du canal de propagation puissent être considérés comme constants sur au moins la bande fréquentielle d'un bloc.

Selon un mode de réalisation particulier, la taille des blocs selon l'axe des fréquences est égale à la taille d'un bloc de données attribué à un utilisateur en référence par exemple à un entrelacement par bloc effectué en amont dans la chaîne d'émission. Dans le cas où cette taille est égale au nombre de porteuses de données du modulateur OFDM, ceci peut permettre de répartir les symboles correspondant sur l'ensemble de la bande de fréquence et donc de faire bénéficier à un utilisateur de l'ensemble de la bande fréquentielle. Ainsi, un utilisateur n'est à priori pas plus défavorisé que les autres utilisateurs par les perturbations dans la bande introduites par le canal de propagation puisque les symboles d'un utilisateur peuvent être répartis sur toute la bande. Dans un autre cas où cette taille est inférieure au nombre de porteuses de données du modulateur OFDM, ceci peut être associé à une technique OFDMA, les symboles de cet utilisateur étant alors distribués sur une partie de la bande.

En outre, l'invention a pour objet un procédé de réception adapté à recevoir un signal multi porteuses émis selon un procédé d'émission selon l'invention. Le procédé de réception est destiné à être mis en oeuvre par un système à Nt antennes d'émission où Nt est supérieur ou égal à deux, Nr antennes de réception où Nr est supérieur ou égal à un, le système mettant en oeuvre une répartition de symboles avant émission suivant un plan temps fréquence et mettant en oeuvre une modulation OFDM/OQAM. Le procédé de réception comprend l'étape :

de décodage espace temps par un décodeur inverse d'un codeur espace temps de matrice de codage $Nt \times N$ et de rendement Nc/N déterminés pour générer Nt séquences codées de N blocs de symboles d'une séquence d'entrée de Nc blocs de symboles de taille $n_t.n_f$ avec $n_t \geq 3$ et $n_f \geq 3$, la taille $n_t.n_f$ tenant compte d'au moins une des deux estimations entre un temps de cohérence et une bande de cohérence d'un canal de propagation du signal multi porteuses, pour obtenir des valeurs estimées des symboles des Nc blocs en utilisant des valeurs des coefficients du canal de propagation du signal multi porteuses émis supposés constants sur au moins la durée $n_t$ ou la bande $n_f$.

En outre, l'invention a pour objet un récepteur pour un système multi-antennes. Le récepteur comprend des moyens adaptés pour mettre en oeuvre un procédé de réception selon l'invention. Le récepteur d'un signal multi porteuses destiné à un système à Nt antennes d'émission où Nt est supérieur ou égal à deux, Nr antennes de réception où Nr est supérieur ou égal à un, comprend :

- un module de démodulation OFDM/OQAM,
- un module adapté de décodage espace temps par un décodeur inverse d'un codeur espace temps de type réel de matrice de codage $Nt \times N$ et de rendement Nc/N déterminés pour générer Nt séquences codées de N blocs de symboles d'une séquence d'entrée de Nc blocs de symboles de taille $n_t.n_f$ avec $n_t \geq 3$ et $n \geq 3$, la taille $n_t.n_f$ tenant compte d'au moins une des deux estimations entre un temps de cohérence et une bande de cohérence d'un canal de propagation du signal multi porteuses, pour obtenir des valeurs estimées des symboles des Nc blocs en utilisant des coefficients du canal de propagation supposés constants sur au moins la durée $n_t$ ou la bande $n_f$.

En outre, l'invention a pour objet un système multi-antennes comprenant au moins un émetteur et un récepteur selon l'un des objets précédents.

Dans le cadre de l'invention, le système multi antennes a au moins deux antennes d'émission et est aussi bien un système MIMO, qu'un système MISO. Dans la suite du document, un système MIMO doit être compris comme un système à plusieurs antennes d'émission quel que soit le nombre d'antennes de réception ( $Nr \geq 1$ ).

Selon une implémentation préférée, les étapes du procédé d'émission, respectivement de réception, sont déterminées par les instructions d'un programme d'émission incorporé dans un circuit électronique telle une puce elle-même pouvant être disposée dans un dispositif électronique tel un émetteur, respectivement un récepteur. Le procédé d'émission, respectivement de réception, selon l'invention peut tout aussi bien être mis en oeuvre lorsque ce programme est chargé dans un organe de calcul tel un processeur ou équivalent dont le fonctionnement est alors commandé par l'exécution du programme.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

Alternativement, le support d'informations peut être un circuit intégré dans lequel le programme est incorporé, le circuit étant adapté pour exécuter ou pour être utilisé dans l'exécution du procédé en question.

D'autre part, le programme peut être traduit en une forme transmissible telle qu'un signal électrique ou optique, qui peut être acheminé via un câble électrique ou optique, par radio ou par d'autres moyens. Le programme selon l'invention peut être en particulier téléchargé sur un réseau de type Internet.

### 4. Liste des figures

D'autres caractéristiques et avantages de l'invention apparaîtront lors de la description qui suit faite en regard de figures annexées données à titre d'exemples non limitatifs.

La figure 1 est un schéma d'un système de communication de l'art antérieur.

La figure 2 est une illustration d'un schéma de codage espace temps connu de type Alamouti.

La figure 3 est un schéma d'un système de transmission particulier selon l'invention permettant la mise en oeuvre d'un procédé d'émission selon l'invention et d'un procédé de réception selon l'invention.

La figure 4 est un organigramme d'une réalisation d'un procédé d'émission selon l'invention.

La figure 5 est une illustration d'une répartition de symboles dans le plan temps fréquence effectuée avec un schéma de codage espace temps effectué sur deux blocs successifs en temps, par exemple de type Alamouti, selon un exemple de réalisation considérant deux flux de symboles.

La figure 6 est une illustration d'une répartition de symboles dans le plan temps fréquence effectuée avec un schéma de codage espace temps effectué sur deux blocs successifs en fréquence, selon un exemple de réalisation considérant deux flux de symboles.

La figure 7 est une illustration d'une répartition de symboles dans le plan temps fréquence effectuée avec un schéma de codage espace temps effectué sur deux blocs successifs en temps, selon un exemple de réalisation considérant deux flux de symboles.

La figure 8 est un schéma d'une réalisation particulière d'un émetteur selon l'invention adapté pour permettre la mise en oeuvre d'un procédé d'émission selon l'invention.

La figure 9 est un schéma d'une réalisation particulière d'un récepteur selon l'invention adapté pour permettre la mise en oeuvre d'un procédé de réception selon l'invention.

La figure 10 est une illustration d'une répartition de symboles dans le plan temps fréquence effectuée avec un schéma de codage espace temps effectué sur deux blocs successifs en temps avec une taille $n_t$x$n_f$ de blocs de 12x8, selon un exemple de réalisation considérant deux flux de symboles.

La figure 11 est une illustration d'une répartition de symboles $D_i$ dans le plan temps fréquence effectuée avec un schéma de codage espace temps effectué sur deux blocs successifs en temps, selon un exemple de réalisation considérant deux flux de symboles.

## 5. Description d'un mode de réalisation de l'invention

En regard de la figure 3, un procédé d'émission d'un signal multi porteuses selon l'invention est destiné à être mis en oeuvre par un système SY à Nt antennes d'émission $TX_1$,...,$TX_{Nt}$, où Nt est supérieur ou égal à deux, Nr antennes de réception $RX_1$,...,$RX_{Nr}$, où Nr est supérieur ou égal à un, du type mettant en oeuvre une répartition de symboles à transmettre suivant un plan temps fréquence et mettant en oeuvre une modulation OFDM/OQAM. Le canal de propagation CT transmet les symboles de l'émetteur EM au récepteur RE. Le canal de propagation est considéré comme englobant les antennes d'émission et de réception. Selon l'exemple illustré Nt est égal à deux et Nr est égal à un.

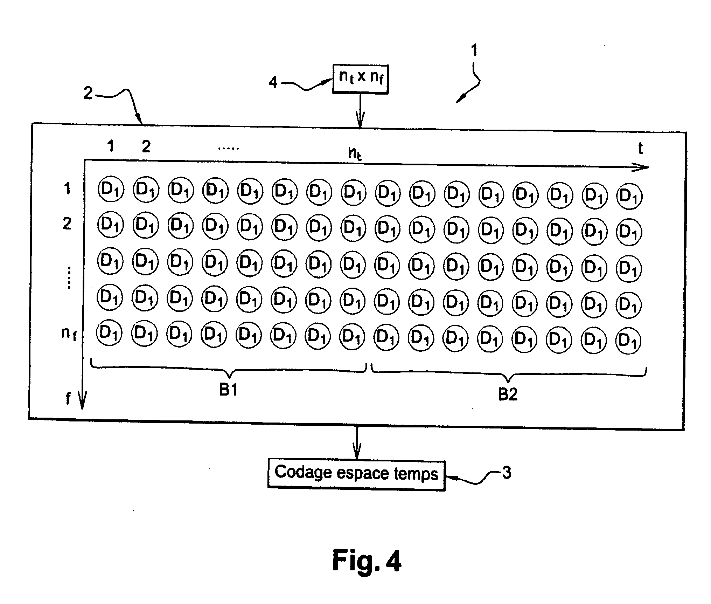

La figure 4 représente un organigramme d'une réalisation d'un procédé d'émission selon l'invention. Le procédé 1 comprend :

- une répartition 2 sur des blocs de taille déterminée $n_t.n_f$ avec $n_t{\geq}3$ et $n_f{\geq}3$ des symboles $D_1$ à transmettre,
- un codage 3 espace temps de type réel de Nc blocs indépendants pour déterminer Nt séquences codées, chacune de longueur N (N blocs successifs de symboles). Le rendement du code est Nc/N et ce code peut être représenté par une matrice de taille $Nt{\times}N$

La détermination 4 d'une taille $n_t.n_f$ de blocs temps fréquence tient compte d'au moins une des deux estimations entre un temps de cohérence et une bande de cohérence du canal de propagation. Les opérations précédentes ne se déroulent pas forcément séquentiellement dans le temps et peuvent tout aussi bien être simultanées et éventuellement imbriquées.

Deux types de codage espace temps sont à distinguer : un premier type qui correspond aux codages espace temps qui codent des symboles pris successivement en temps, un second type qui correspond aux codages espace temps qui codent des symboles pris successivement en fréquence.

Pour le premier type de codage espace temps, la taille $n_t$ de blocs en temps doit correspondre à au moins trois temps symboles OFDM pour qu'il existe des symboles dits à l'intérieur d'un bloc dont les voisins restent les mêmes pour deux blocs consécutifs d'une séquence de codage de N blocs.

Pour le second type de codage espace temps, la taille $n_f$ de blocs selon l'axe fréquentiel doit correspondre à au moins trois symboles pour qu'il existe des symboles dits à l'intérieur d'un bloc dont les voisins restent les mêmes entre deux blocs consécutifs d'une séquence de codage de N blocs.

Quel que soit le type de codage espace temps, la taille maximum selon l'axe fréquentiel et selon l'axe temporel est celle qui permet d'obtenir les meilleures performances en termes de taux d'erreur binaire. La taille maximum dépend du canal de propagation considéré pour la transmission MIMO ou MISO. En effet, l'hypothèse est faite que le canal de propagation est invariant sur un bloc, en temps ou en fréquence en fonction du type de codage espace-temps. La taille maximum selon l'axe fréquentiel et selon l'axe temporel dépend donc respectivement de la bande de cohérence et du temps de cohérence du canal de propagation.

Pour Nt antennes d'émission, les blocs de symboles sont regroupés par séquence de Nc blocs avant le codage espace temps de rendement Nc/N. N est la longueur d'une séquence de codage, $N \geq Nt,$ c'est-à-dire d'un mot de code espace temps.

Le codage espace temps d'une séquence de Nc blocs fournit $Nt \times N$ versions codées par le code espace temps "réel". Chacune de ces séquences de longueur N comprend Nc blocs indépendants. Le rendement de ce code espace temps est définit par le rapport Nc/N (nombre de blocs "utiles" transmis par unité de "temps-bloc", un temps-bloc étant le temps pour transmettre un bloc de symboles). Les blocs codés sont envoyés sur chacune des Nt antennes et les Nt antennes transmettent simultanément un bloc codé tous les temps bloc.

Par exemple le code espace temps de type réel peut être le code d'Alamouti en réel. Dans un système à deux antennes d'émission et dans le cas d'un code d'Alamouti en réel, la valeur minimale de N est deux. Dans le cas où N est égal à deux, les versions suivantes des blocs sont transmises :

[B1 B2] sur l'antenne 1
[B2-B1] sur l'antenne 2.

Dans le cas où N est égal à quatre et dans le cas d'un code espace temps de Tarokh, les versions suivantes des blocs sont transmises :

[B1 B2 B3 B4] sur l'antenne 1
[B2 -B1 B4 -B3] sur l'antenne 2

Dans un système avec plus de deux antennes, par exemple Nt est égal à quatre antennes et N est égal à quatre blocs en temps, les versions suivantes des blocs sont transmises dans le cas d'un code espace temps de Tarokh :

[B1 B2 B3 B4] sur l'antenne 1
[-B2 B1 -B4 B3] sur l'antenne 2
[-B3 B4 B1 -B2] sur l'antenne 3
[-B4 -B3 B2 B1] sur l'antenne 4

Bi signifie que pour l'ensemble des symboles du bloc, les symboles sont transmis tels quels. -Bi signifie que pour l'ensemble des symboles du bloc, les opposés des symboles sont transmis.
Selon un mode de réalisation particulier, le procédé comprend en outre :

- une séparation des symboles à transmettre en deux flux distincts,
- un codage canal, en amont du codage espace temps, en utilisant des codes de rendement différent entre les différents flux.

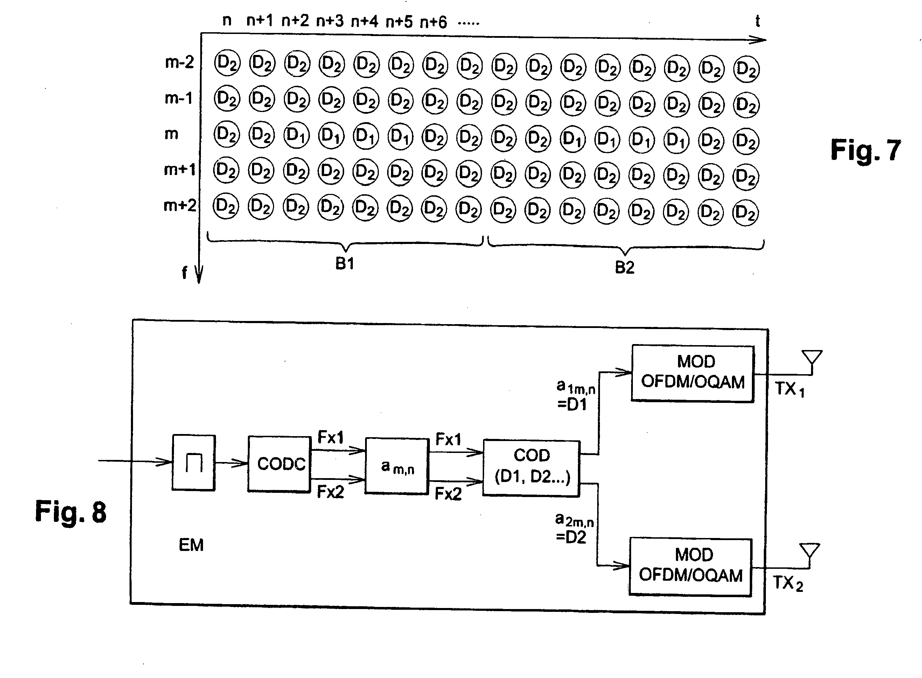

Le critère de séparation en deux flux peut être le type de symboles, symboles de données-symboles de contrôle, il peut être l'utilisateur, utilisateur1-utilisateur 2, il peut être lié à la source des données, source 1-source 2 qui correspondent par exemple à deux types différents de service pour lesquels la QOS (acronyme des termes anglosaxons Quality Of Service) garantie n'est pas la même...
Le procédé effectue un codage de canal de ces deux flux avec deux codages de rendements respectifs différents ; le flux deux est codé avec un rendement inférieur au rendement utilisé pour le flux un. Autrement dit, le flux deux est codé avec un code qui présente une capacité de correction plus importante que le code utilisé pour le flux un.

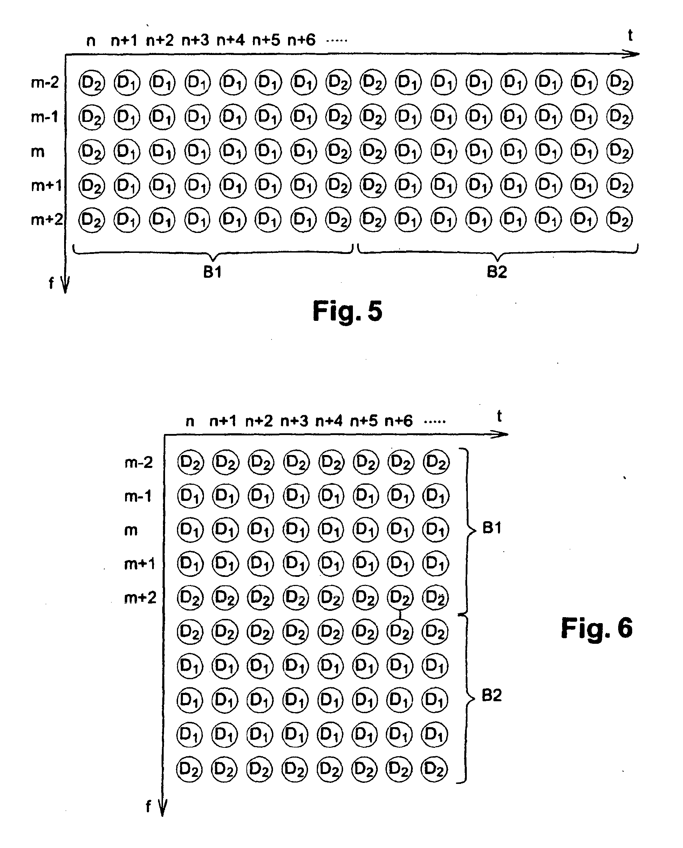

La figure 5 illustre une répartition possible des symboles $D_1$, respectivement $D_2$, du flux un, respectivement du flux deux, dans deux blocs successifs B1, B2 dans le cas d'un codage espace temps du premier type.
La figure 6 illustre une répartition possible des symboles $D_1$, respectivement $D_2$, du flux un, respectivement du flux deux, dans deux blocs successifs B1, B2 dans le cas d'un codage espace temps du second type.
Selon ce mode, la taille minimale de bloc doit vérifier les contraintes suivantes.
Pour le premier type de codage espace temps, la taille de blocs est supérieure ou égale à une valeur minimum de trois symboles selon l'axe fréquentiel pour permettre la répartition des deux flux.
Pour le second type de codage espace temps, la taille de blocs est supérieure ou égale à une valeur minimum de trois symboles selon l'axe temporel pour permettre la répartition des deux flux.
La répartition sur des blocs des symboles des différents flux est, selon ce mode, effectuée en réservant au moins, dans le cas du premier type de codage espace temps, la première et dernière colonnes d'un bloc aux symboles du flux pour lequel le code canal a le rendement le plus faible comme illustré par la figure 5, respectivement la première et dernière lignes d'un bloc dans le cas du second type de codage espace temps comme illustré par la figure 6.
Selon une mise en oeuvre particulière, l'étape de répartition des symboles alloue plus d'emplacements dans le plan temps fréquence aux symboles du flux deux. La figure 7 illustre une telle mise en oeuvre dans le cas où le procédé répartit les symboles $D_2$ du flux deux sur les première, deuxième, avant dernière et dernière sous porteuses du bloc à chaque temps symbole OFDM et sur les premier, deuxième, avant dernier et dernier temps symbole OFDM à chaque porteuse d'un bloc.
La répartition du nombre d'emplacements temps fréquence entre les deux flux détermine le débit respectif alloué à chaque flux. Ceci permet donc d'attribuer un débit plus important à l'un des deux flux.
La figure 8 illustre un exemple d'émetteur EM adapté pour mettre en oeuvre un procédé d'émission selon l'invention.
L'émetteur EM comprend un module $\Pi$ d'entrelacement binaire, un codeur de canal CODC, un module de transformation en symboles réels $a_{m,n}$, un codeur espace temps COD, deux modules de modulation multi porteuses OFDM/OQAM. L'émetteur EM est relié à deux antennes d'émission $TX_1$ et $TX_2$.
Le module $\Pi$ d'entrelacement binaire entrelace de manière connue les données présentes en entrée. Le codeur de canal CODC est adapté pour distinguer deux flux de données d'entrée et pour coder les deux flux avec un code de rendement déterminé différent entre les deux flux. Le module de transformation effectue le mapping des bits codés sur des symboles de donnée $a_{m,n}$ à valeurs réelles. Le codeur espace temps COD est adapté pour répartir les symboles de données d'entrée dans un plan temps fréquence dans des blocs B$_i$ de taille déterminée n$_t$xn$_f$ avec n$_t \geq$3 et pour coder des séquences de Nc blocs pour générer par séquence, deux versions codées de la séquence, une par antenne d'émission. Avant d'être transmise par une antenne, une séquence codée est modulée par un modulateur multi porteuses selon une modulation OFDM/OQAM.

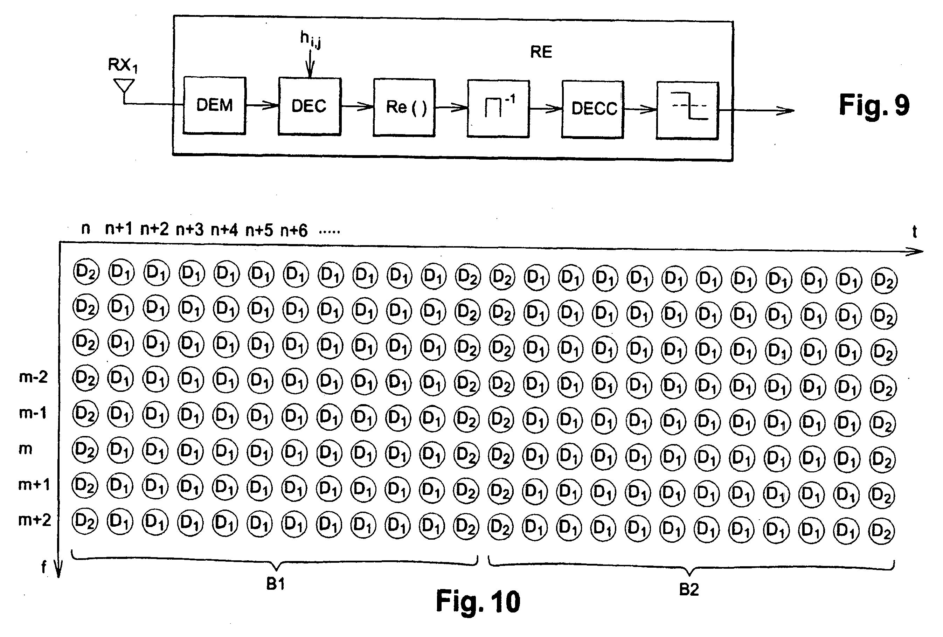

La figure 9 illustre un exemple de récepteur RE adapté pour mettre en oeuvre un procédé de réception selon l'invention. Le récepteur RE est adapté à recevoir un signal émis par un émetteur selon l'invention.

Selon l'illustration, le récepteur RE est en relation avec une seule antenne RX1. Le système correspondant est donc un système MISO. Le récepteur RE comprend au moins les modules adaptés pour implémenter les fonctions inverses à celles mises en oeuvre à l'émission. Ainsi, le récepteur RE comprend un module DEM de démodulation, un module DEC d'égalisation et de décodage espace temps, un module Re d'extraction des parties réelles du signal, un module $\Pi^{-1}$ de desentrelacement, un module DECC de décodage de canal, un module d'estimation.

Le module DEM de démodulation effectue une démodulation multi porteuses typiquement au moyen d'une transformée de Fourier.

Le module DEC effectue une égalisation au moyen d'une technique connue, par exemple une technique de forçage à zéro, en utilisant les coefficients h$_{i,j}$ du canal de propagation. Ces coefficients sont connus, par exemple du fait de l'exploitation d'un préambule ou de signaux pilotes répartis dans la trame. Ce module est en outre adapté pour effectuer en outre l'opération inverse du codage espace temps mis en oeuvre à l'émission par le module COD.

Le module Re extrait la partie réelle des signaux issus du décodage espace temps. La modulation mise en oeuvre à l'émission étant une modulation OFDM/OQAM, seule la partie réelle comprend l'information utile.

Le module $\Pi^{-1}$ effectue l'opération inverse de l'opération d'entrelacement mise en oeuvre à l'émission par le module d'entrelacement $\Pi$.

Le module DECC est adapté pour effectuer le décodage canal en mettant en oeuvre une fonction inverse à celle mise en oeuvre à l'émission par le module CODC de codage de canal.

Une mise en oeuvre d'un procédé d'émission et d'un procédé de réception conformes à l'invention est décrite ci-après à l'appui d'un exemple particulier.

Le système considéré est de type MISO à deux antennes d'émission. Le codage canal code deux flux avec deux rendements de codage différents. La taille de bloc déterminée dans cet exemple est de n$_t$.n$_f$ =8x12 : huit symboles selon l'axe fréquentiel et douze symboles selon l'axe temporel, soit quatre vingt seize symboles par bloc. Les symboles D2 du flux deux sont réparties le long des deux bords selon l'axe fréquentiel des blocs. La répartition pour deux blocs successifs B1 et B2 est représentée à la figure 10. Le codage espace temps est un codage d'Alamouti 2x1. A l'issue du codage espace temps le bloc B1, puis le bloc B2 est transmis par l'antenne un et simultanément le bloc B2, puis le bloc -B1 est transmis par l'antenne deux.

Le procédé à la réception suppose que le canal de propagation est constant sur au moins la durée d'un bloc.

Le premier exemple de système considéré est choisi de type DVB-T :

taille de la FFT = 2048,
nombre de porteuses modulées = 1512.
Le nombre de blocs pour l'ensemble de la bande est donc : 1512/8=189.

Le système étant de type MISO, le canal de propagation comporte deux sous-canaux : de l'antenne d'émission un à l'antenne de réception et de l'antenne d'émission deux à l'antenne de réception. Chaque sous canal est caractérisé par un coefficient h$_i$, i=1,2. La détermination de ces coefficients par le récepteur est effectuée selon des techniques connues, typiquement par l'exploitation d'un préambule ou par l'exploitation de pilotes.

Les signaux reçus par le récepteur peuvent s'exprimer de la manière suivante :

$$\text{au temps bloc } t_1: R1 = h_1 B1 + h_2 B2, \qquad (13)$$

$$\text{au temps bloc } t_2: R2 = h_1 B2 - h_2 B1. \qquad (14)$$

Le module DEC décode comme suit dans le domaine complexe :

$$\text{estimées sur les symboles du bloc B1:} \qquad B1 = (h_1 R1 - h_2 R2)/(h_1{}^2 + h_2{}^2) \qquad (15)$$

estimées sur les symboles du bloc B2: $\qquad$ $B2 = (h_2R1 - h_1R2)/(h_1{}^2 + h_2{}^2)$ $\qquad$ (16)

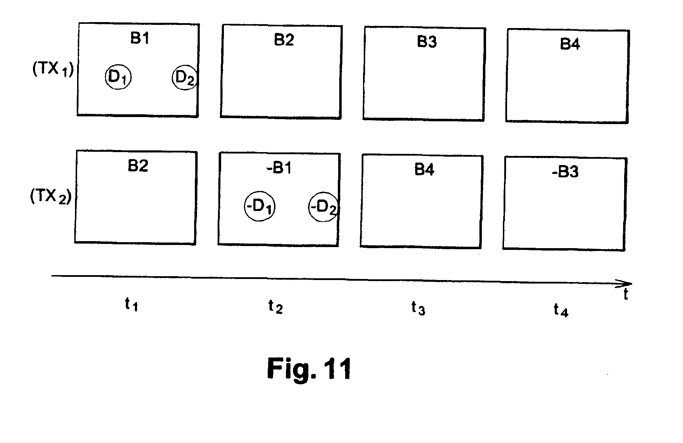

Comme illustré par la figure 11, les symboles transmis dans le voisinage des symboles D1 des blocs B1 et B2 (les huit symboles les entourant dans le plan temps fréquence) sont les mêmes dans les deux blocs provenant des deux antennes d'émission. L'interférence intrinsèque générée sur la partie imaginaire est donc la même sur les deux versions codées des blocs transmis respectivement par l'antenne un et par l'antenne deux. Ces symboles sont donc décodés sans biais (sans erreur supplémentaire due au codage/décodage espace temps).

Comme illustré par la figure 11, les symboles transmis dans le voisinage des symboles D2 des blocs B1 et B2 (les huit symboles les entourant dans le plan temps fréquence) sont différents dans les deux blocs provenant des deux antennes d'émission car la séquence des blocs est différente entre les deux antennes. Une erreur additionnelle apparaît donc due à cette différence de voisinage : l'interférence intrinsèque est différente et le calcul de B1 et B2 selon les expressions (15) et (16) génère un biais. Pour pallier ce problème, les symboles D2 sont encodés indépendamment des symboles D1 en utilisant un code correcteur d'erreur plus puissant que celui utilisé pour coder les données D1, lors du codage canal.

Le décodage des deux flux s'effectue ensuite de manière similaire au décodage mis en oeuvre dans le cas d'une réception OFDM/OQAM SISO (Single Input Single Output) connue de l'art antérieur.

L'exemple suivant illustre l'étape de détermination de la taille d'un bloc.

L'exemple prend comme hypothèse que le canal de propagation est de type Canal Vehicular A avec une vitesse de déplacement du mobile de 60 km/h. Ce canal induit un étalement Tmax des échos de 2,5 $\mu$s. L'exemple prend en outre comme hypothèse que la fréquence porteuse du signal est de 2.5 GHz (hypothèse couramment utilisée pour les systèmes dimensionnés dans le cadre de l'instance de normalisation 3GPP LTE). Pour une vitesse de déplacement de 60 km/h (16,67 m/s), cela donne une fréquence Doppler de 140 Hz.

Le temps de cohérence lié a cette fréquence Doppler est de 1/(2.Fd)=1/280 = 3,5 ms.

La bande de cohérence liée à l'étalement des échos est de 1/(2Tmax) =1/5 $\mu$s = 200kHz.

Dans un système de type 3GPP LTE, en supposant une bande de transmission utile de 20 MHz, les paramètres sont les suivants :

- Fréquence d'échantillonnage Fs = 30,72 MHz
- Nombre de sous porteuse sur la bande totale Fs: FFT = 2048

Sachant que le nombre de sous-porteuses utiles sur 20 MHz est d'environ 2/3*FFT alors :

- Temps symbole OFDM/OQAM = FFT/Fs * ½ = 33,33 $\mu$s
- Largeur de bande d'une sous-porteuse = 15kHz

Taille maximum de bloc par rapport au temps et à la bande de cohérence :

- temps de cohérence = 105 symboles OFDM/OQAM
- Bande de cohérence = 13 sous-porteuses en fréquence.

Le canal est considéré comme sensiblement constant sur la bande de cohérence et le temps de cohérence. En prenant des blocs de ¼ du temps de cohérence ou de ½ de la bande de cohérence, il est donc raisonnable de considérer que le canal est constant sur un bloc en temps ou sur un bloc en fréquence.

Dans le cas de l'exemple retenu ceci conduit à :

- des blocs de 26 symboles en temps, dans le cas de codage espace-temps avec des symboles successifs en temps. La proportion de données D2 à protéger par un code correcteur d'erreur plus puissant est donc de 2/26 ~ 7,6 %, en prenant une répartition des symboles D2 sur uniquement les deux colonnes extérieures d'un bloc.
- à des blocs de 7 symboles en fréquence, dans le cas de codage espace-temps avec des symboles successifs en fréquence. La proportion de données D2 à protéger par un code correcteur d'erreur plus puissant est donc de 2/7 ~ 28,6 % en prenant une répartition des symboles D2 sur uniquement les deux lignes extérieures d'un bloc.

Le second exemple de système considéré est choisi de type DVB-T2, avec un canal de propagation de 10 MHz. Certains paramètres changent par rapport à un système de type DVB-T. En particulier :

- Fréquence d'échantillonnage Fs = 15,36 MHz

Le temps symbole OFDM/OQAM devient égal à FFT/Fs * ½ = 66,67 μs. La largeur de bande d'une sous-porteuse devient égale à 7,5 kHz. Le temps de cohérence devient égal à 53 symboles OFDM/OQAM. La bande de cohérence devient égale à 27 sous-porteuses en fréquence.

Le canal est considéré comme sensiblement constant sur la bande de cohérence et le temps de cohérence. En prenant des blocs de ¼ du temps de cohérence ou de ½ de la bande de cohérence il est donc raisonnablement de considérer que le canal est constant sur un bloc en temps ou sur un bloc en fréquence.

Dans le cas de l'exemple retenu ceci conduit à :

- à des blocs de 26 symboles en temps, dans le cas de codage espace-temps avec des symboles successifs en temps. La proportion de données D2 à protéger par un code correcteur d'erreur plus puissant est donc de 2/13 ~ 15,4 % en prenant une répartition des symboles D2 sur uniquement les deux colonnes extérieures d'un bloc.
- à des blocs de 7 en fréquence, dans le cas de codage espace-temps avec des symboles successifs en fréquence. La proportion de données D2 à protéger par un code correcteur d'erreur plus puissant est donc de 2/13 ~ 15,4 % en prenant une répartition des symboles D2 sur uniquement les deux lignes extérieures d'un bloc.

**Revendications**

1. Procédé (1) d'émission d'un signal multi porteuses destiné à être mis en oeuvre par un système à $N_t$ antennes d'émission ($TX_1$,...,$TX_{Nt}$), où Nt est supérieur ou égal à deux, Nr antennes de réception ($RX_1$,...,$RX_{Nr}$), où Nr est supérieur ou égal à un, ledit signal étant composé par des symboles et ledit système étant du type mettant en oeuvre une répartition de symboles avant émission suivant un plan temps fréquence et mettant en oeuvre une modulation OFDM/OQAM, dans lequel la répartition (2) des symboles est effectuée sur des blocs de taille déterminée $n_t.n_f$ avec $n_t \geq 3$ et $n_f \geq 3$, ledit procédé étant **caractérisé par** :

    - un codage (3) espace temps de type réel de séquences de blocs de taille $n_t.n_f$, par un codeur espace temps de matrice de codage $Nt \times N$ et de rendement Nc/N déterminés pour générer Nt séquences codées de N blocs de symboles d'une séquence d'entrée de Ne blocs de symboles.

2. Procédé (1) d'émission d'un signal multi porteuses selon la revendication 1, comprenant en outre :

    - une détermination (4) d'une taille $n_t.n_f$ de blocs temps fréquence tenant compte d'au moins une des deux estimations entre un temps de cohérence et une bande de cohérence d'un canal de propagation du signal multi porteuses.

3. Procédé (1) d'émission d'un signal multi porteuses selon l'une des revendications 1 et 2, comprenant en outre l'étape, avant codage espace temps :

    - de codage canal de deux flux avec un code de rendement déterminé différent entre les flux et dans lequel la répartition sur des blocs de taille $n_t.n_f$ des symboles est effectuée en réservant au moins certains emplacements temps fréquence des bords d'un bloc aux symboles du flux codé avec le code de rendement le plus petit.

4. Procédé (1) d'émission d'un signal multi porteuses selon la revendication 3 dans lequel le codage espace temps est du type codant des blocs de symboles répartis successivement en temps pour un flux donné et dans lequel les emplacements réservés constituent des colonnes d'un bloc.

5. Procédé (1) d'émission d'un signal multi porteuses selon la revendication 3 dans lequel le codage espace temps est du type codant des blocs de symboles répartis successivement en fréquence pour un flux donné et dans lequel les emplacements réservés constituent des lignes d'un bloc.

6. Procédé (1) d'émission d'un signal multi porteuses selon l'une des revendications 3 à 5 dans lequel le nombre d'emplacements réservés aux symboles du flux codé avec le code de rendement le plus petit est supérieur aux nombres d'emplacements restant pour les symboles du flux codé avec le code de rendement le plus grand.

7. Emetteur (EM) d'un signal multi porteuses destiné à un système à Nt antennes d'émission ($TX_1$,...,$TX_{Nt}$), où Nt est supérieur ou égal à deux, Nr antennes de réception ($RX_1$,...,$RX_{Nr}$), où Nr est supérieur ou égal à un, ledit signal étant composé par des symboles et ledit système étant du type mettant en oeuvre une répartition de symboles avant émission suivant un plan temps fréquence et mettant en oeuvre une modulation OFDM/OQAM, ledit émetteur étant **caractérisé par** :

- un codeur espace temps de type réel de matrice de codage Nt $\times$ N et de rendement Nc/N déterminés adapté pour répartir des symboles sur des blocs de taille déterminée $n_t.n_f$ avec $n_t \geq 3$ et $n_f \geq 3$ et pour générer Nt séquences codées de N blocs de symboles d'une séquence d'entrée de Nc blocs de symboles.

8. Emetteur (EM) d'un signal multi porteuses selon la revendication 7 comprenant en outre :

- un module adapté pour déterminer une taille $n_t.n_f$ de blocs temps fréquence tenant compte d'au moins une des deux estimations entre un temps de cohérence et une bande de cohérence d'un canal de propagation du signal multi porteuses.

9. Procédé de réception d'un signal multi porteuses destiné à être mis en oeuvre par un système à Nt antennes d'émission ($TX_1,...,TX_{N1}$), où Nt est supérieur ou égal à deux, Nr antennes de réception ($RX_1,...,RX_{Nr}$), où Nr est supérieur ou égal à un, ledit signal étant composé par des symboles et le système mettant en oeuvre une répartition de symboles avant émission suivant un plan temps fréquence et mettant en oeuvre une modulation OFDM/OQAM, comprenant l'étape :

- de décodage espace temps par un décodeur inverse d'un codeur espace temps de matrice de codage *Nt* $\times$ *N* et de rendement Nc/N déterminés pour générer Nt séquences codées de N blocs de symboles d'une séquence d'entrée de Nc blocs de symboles de taille $n_t.n_f$ avec $n_t \geq 3$ et $n_f \geq 3$, la taille $n_t.n_f$ tenant compte d'au moins une des deux estimations entre un temps de cohérence et une bande de cohérence d'un canal de propagation du signal multi porteuses, pour obtenir des valeurs estimées des symboles des Nc blocs en utilisant des valeurs des coefficients du canal de propagation du signal multi porteuses émis supposés constants sur au moins la durée n, ou la bande $n_f$.

10. Récepteur (RE) d'un signal multi porteuses destiné à un système à Nt antennes d'émission ($TX_1,...,TX_{Nr}$), où Nt est supérieur ou égal à deux, Nr antennes de réception ($RX_1,...,RX_{Nr}$), où Nr est supérieur ou égal à un, ledit signal étant composé par des symboles et ledit système étant du type mettant en oeuvre une répartition de symboles avant émission suivant un plan temps fréquence et mettant en oeuvre une modulation OFDM/OQAM, ledit récepteur étant **caractérisé par** :

- un module de démodulation OFDM/OQAM,
- un module adapté de décodage espace temps par un décodeur inverse d'un codeur espace temps de type réel de matrice de codage *Nt* $\times$ *N* et de rendement Nc/N déterminés pour générer Nt séquences codées de N blocs de symboles d'une séquence d'entrée de Nc blocs de symboles de taille $n_t.n_f$ avec $n_t \geq 3$ et $n_f \geq 3$, la taille $n_t.n_f$ tenant compte d'au moins une des deux estimations entre un temps de cohérence et une bande de cohérence d'un canal de propagation du signal multi porteuses, pour obtenir des valeurs estimées des symboles des Nc blocs en utilisant des coefficients du canal de propagation supposés constants sur au moins la durée $n_t$ ou la bande $n_f$.

11. Système (SY) multi-antennes **caractérisé en ce qu'**il comprend un émetteur (EM) selon la revendication 7 et un récepteur (RE) selon la revendication 10.

12. Programme d'ordinateur sur un support d'informations, ledit programme comportant des instructions de programme adaptées à la mise en oeuvre d'un procédé (1) d'émission selon l'une quelconque des revendications 1 à 6, lorsque ledit programme est chargé et exécuté dans un émetteur (EM).

13. Support d'informations comportant des instructions de programme adaptées à la mise en oeuvre d'un procédé (1) d'émission selon l'une quelconque des revendications 1 à 6, lorsque ledit programme est chargé et exécuté dans un émetteur (EM).

14. Programme d'ordinateur sur un support d'informations, ledit programme comportant des instructions de programme adaptées à la mise en oeuvre d'un procédé de réception selon la revendication 9, lorsque ledit programme est chargé et exécuté dans un récepteur (RE).

15. Support d'informations comportant des instructions de programme adaptées à la mise en oeuvre d'un procédé de réception selon la revendication 9, lorsque ledit programme est chargé et exécuté dans un récepteur (RE).

**Patentansprüche**

1. Verfahren (1) zum Senden eines Mehrträgersignals, das dazu bestimmt ist, von einem System mit $N_t$ Sendeantennen ($TX_1$, ..., $TX_{Nt}$), wobei Nt größer als oder gleich zwei ist, Nr Empfangsantennen ($RX_1$, ..., $RX_{Nr}$) durchgeführt zu werden, wobei Nr größer als oder gleich eins ist, wobei das Signal aus Symbolen zusammengesetzt und das System von der Art ist, die eine Verteilung von Symbolen vor dem Senden gemäß einer Zeit-Frequenz-Ebene und eine Modulation OFDM/OQAM durchführt, wobei die Verteilung (2) der Symbole auf Blöcke bestimmter Größe $n_t.n_f$ mit $n_t \geq 3$ und $n_f \geq 3$ ausgeführt wird, wobei das Verfahren **gekennzeichnet ist durch**:

   - eine Raum-Zeit-Codierung (3) vom realen Typ von Folgen von Blöcken einer Größe $n_t.n_f$ **durch** einen Raum-Zeit-Codierer einer bestimmten Codiermatrix Nt x N und eines Wirkungsgrads Nc/N, um Nt codierte Folgen von N Blöcken von Symbolen einer Eingangsfolge von Nc Blöcken von Symbolen zu erzeugen.

2. Verfahren (1) zum Senden eines Mehrträgersignals nach Anspruch 1, das außerdem enthält:

   - eine Bestimmung (4) einer Größe $n_t.n_f$ von Zeit-Frequenz-Blöcken, die mindestens eine der zwei Schätzungen zwischen einer Kohärenzzeit und einem Kohärenzband eines Ausbreitungskanals des Mehrträgersignals berücksichtigt.

3. Verfahren (1) zum Senden eines Mehrträgersignals nach einem der Ansprüche 1 und 2, das außerdem vor der Raum-Zeit-Codierung den Schritt enthält:

   - einer Kanalcodierung von zwei Strömen mit einem Code mit unterschiedlichem bestimmtem Wirkungsgrad zwischen den Strömen, und wobei die Verteilung auf Blöcke einer Größe $n_t.n_f$ der Symbole ausgeführt wird, indem mindestens bestimmte Zeit--Frequenz-Stellen der Ränder eines Blocks für die Symbole des mit dem Code mit dem geringsten Wirkungsgrad codierten Stroms reserviert werden.

4. Verfahren (1) zum Senden eines Mehrträgersignals nach Anspruch 3, wobei die Raum-Zeit-Codierung von der Art ist, die Blöcke von Symbolen codiert, die nacheinander in der Zeit für einen gegebenen Strom verteilt sind, und wobei die reservierten Stellen Spalten eines Blocks bilden.

5. Verfahren (1) zum Senden eines Mehrträgersignals nach Anspruch 3, wobei die Raum-Zeit-Codierung von der Art ist, die Blöcke von Symbolen codiert, die nacheinander frequenzmäßig für einen gegebenen Strom verteilt sind, und wobei die reservierten Stellen Zeilen eines Blocks bilden.

6. Verfahren (1) zum Senden eines Mehrträgersignals nach einem der Ansprüche 3 bis 5, wobei die Anzahl von für die Symbole des mit dem Code mit dem geringsten Wirkungsgrad codierten Stroms reservierten Stellen größer ist als die für die Symbole des mit dem Code mit dem größten Wirkungsgrad codierten Stroms verbleibenden Anzahlen von Stellen.

7. Sender (EM) eines Mehrträgersignals, das für ein System mit Nt Sendeantennen ($TX_1$, ..., $TX_{Nt}$), Nr Empfangsantennen ($RX_1$, ..., $RX_{Nr}$) bestimmt ist, wobei Nt größer als oder gleich zwei ist, wobei Nr größer als oder gleich eins ist, wobei das Signal aus Symbolen zusammengesetzt und das System von der Art ist, die eine Verteilung von Symbolen vor dem Senden gemäß einer Zeit-Frequenz-Ebene und eine Modulation OFDM/OQAM durchführt, wobei der Sender **gekennzeichnet ist durch**:

   - einen Raum-Zeit-Codierer vom realen Typ einer bestimmten Codiermatrix Nt x N und eines bestimmten Wirkungsgrads Nc/N, der geeignet ist, um Symbole auf Blöcke bestimmter Größe $n_t.n_f$ mit $n_t \geq 3$ und $n_f \geq 3$ zu verteilen, und um Nt codierte Folgen von N Blöcken von Symbolen einer Eingangsfolge von Nc Blöcken von Symbolen zu erzeugen.

8. Sender (EM) eines Mehrträgersignals nach Anspruch 7, der außerdem enthält:

   - ein Modul, das geeignet ist, um eine Größe $n_t.n_f$ von Zeit-Frequenz-Blöcken unter Berücksichtigung mindestens einer der zwei Schätzungen zwischen einer Kohärenzzeit und einem Kohärenzband eines Ausbreitungskanals des Mehrträgersignals zu bestimmen.

9. Verfahren zum Empfang eines Mehrträgersignals, das von einem System mit Nt Sendeantennen ($TX_1$, ..., $TX_{Nt}$),

Nr Empfangsantennen (RX$_1$, ..., RX$_{Nr}$) durchgeführt werden soll, wobei Nt größer als oder gleich zwei ist, wobei Nr größer als oder gleich eins ist, wobei das Signal aus Symbolen zusammengesetzt ist, und das System eine Verteilung von Symbolen vor dem Senden gemäß einer Zeit-Frequenz-Ebene und eine Modulation OFDM/OQAM durchführt, das den folgenden Schritt enthält:

- Raum-Zeit-Decodierung durch einen inversen Decodierer eines Raum-Zeit-Codierers einer bestimmten Codiermatrix Nt x N und eines bestimmten Wirkungsgrads Nc/N, um Nt codierte Folgen von N Blöcken von Symbolen einer Eingangsfolge von Nc Blöcken von Symbolen der Größe $n_t.n_f$ mit $n_t \geq 3$ und $n_f \geq 3$ zu erzeugen, wobei die Größe $n_t.n_f$ mindestens eine der zwei Schätzungen zwischen einer Kohärenzzeit und einem Kohärenzband eines Ausbreitungskanals des Mehrträgersignals berücksichtigt, um geschätzte Werte der Symbole der Nc Blöcke zu erhalten, unter Verwendung von Werten der Koeffizienten des Ausbreitungskanals des gesendeten Mehrträgersignals, von denen angenommen wird, dass sie über mindestens die Dauer $n_t$ oder das Band $n_f$ konstant sind.

**10.** Empfänger (RE) eines Mehrträgersignals, das für ein System mit Nt Sendeantennen (TX$_1$, ..., TX$_{Nt}$), Nr Empfangsantennen (RX$_1$, ..., RX$_{Nr}$) bestimmt ist, wobei Nt größer als oder gleich zwei ist, wobei Nr größer als oder gleich eins ist, wobei das Signal aus Symbolen zusammengesetzt und das System von der Art ist, die eine Verteilung von Symbolen vor dem Senden gemäß einer Zeit-Frequenz-Ebene und eine Modulation OFDM/OQAM durchführt, wobei der Empfänger **gekennzeichnet ist durch**:

- ein Demodulationsmodul OFDM/OQAM,
- ein geeignetes Modul der Raum-Zeit-Decodierung durch einen inversen Decodierer eines Raum-Zeit-Codierers vom realen Typ einer bestimmten Codiermatrix Nt x N und eines bestimmten Wirkungsgrads Nc/N, um Nt codierte Folgen von N Blöcken von Symbolen einer Eingangsfolge von Nc Blöcken von Symbolen der Größe $n_t.n_f$ mit $n_t \geq 3$ und $n_f \geq 3$ zu erzeugen, wobei die Größe $n_t.n_f$ mindestens eine der zwei Schätzungen zwischen einer Kohärenzzeit und einem Kohärenzband eines Ausbreitungskanals des Mehrträgersignals berücksichtigt, um geschätzte Wert der Symbole der Nc Blöcke zu erhalten, unter Verwendung von Koeffizienten des Ausbreitungskanals, von denen angenommen wird, dass sie mindestens über die Dauer $n_t$ oder das Band $n_f$ konstant sind.

**11.** Mehrantennen-System (SY), **dadurch gekennzeichnet, dass** es einen Sender (EM) nach Anspruch 7 und einen Empfänger (RE) nach Anspruch 10 aufweist.

**12.** Computerprogramm auf einem Informationsträger, wobei das Programm Programmanweisungen aufweist, die zur Durchführung eines Sendeverfahrens (1) nach einem der Ansprüche 1 bis 6 geeignet sind, wenn das Programm in einen Sender (EM) geladen und von ihm ausgeführt wird.

**13.** Informationsträger, der Programmanweisungen aufweist, die zur Durchführung eines Sendeverfahrens (1) nach einem der Ansprüche 1 bis 6 geeignet sind, wenn das Programm in einen Sender (EM) geladen und von ihm ausgeführt wird.

**14.** Computerprogramm auf einem Informationsträger, wobei das Programm Programmanweisungen aufweist, die zur Durchführung eines Empfangsverfahrens nach Anspruch 9 geeignet sind, wenn das Programm in einen Empfänger (RE) geladen und von ihm ausgeführt wird.

**15.** Informationsträger, der Programmanweisungen aufweist, die zur Durchführung eines Empfangsverfahrens nach Anspruch 9 geeignet sind, wenn das Programm in einen Empfänger (RE) geladen und von ihm ausgeführt wird.

## Claims

**1.** Method (1) for transmitting a multicarrier signal intended to be implemented by a system with $N_t$ transmission antennas (TX$_1$,..., TX$_{Nt}$) where Nt is greater than or equal to two, Nr reception antennas (RX$_1$,...,RX$_{Nr}$), where Nr is greater than or equal to one, said signal being composed of symbols and said system being of the type implementing a distribution of symbols before transmission according to a time frequency plan and implementing a modulation OFDM/OQAM, in which the distribution (2) of the symbols is performed over blocks of determined size $n_t.n_f$ with $n_t \geq 3$ and $n_f \geq 3$, said method being **characterized by**:

- a space time coding (3) of real type of sequences of blocks of size $n_t.n_f$, by a space time coder with coding matrix *Nt x N* and of rate Nc/N which are determined so as to generate Nt coded sequences of N blocks of symbols of an input sequence of Nc blocks of symbols.

**2.** Method (1) for transmitting a multicarrier signal according to Claim 1, furthermore comprising:

- a determination (4) of a size $n_t.n_f$ of time frequency blocks taking account of at least one of the two estimations between a coherence time and a coherence band of a propagation channel for the multicarrier signal.

**3.** Method (1) for transmitting a multicarrier signal according to one of Claims 1 and 2, furthermore comprising the step, before space time coding:

- of channel coding of two streams with a code of determined rate differing between the streams and in which the distribution over blocks of size $n_t.n_f$ of the symbols is performed by reserving at least some time frequency slots of the edges of a block for the symbols of the stream coded with the code of smallest rate.

**4.** Method (1) for transmitting a multicarrier signal according to Claim 3, in which the space time coding is of the type coding blocks of symbols distributed successively in time for a given stream and in which the reserved slots constitute columns of a block.

**5.** Method (1) for transmitting a multicarrier signal according to Claim 3, in which the space time coding is of the type coding blocks of symbols distributed successively in frequency for a given stream and in which the reserved slots constitute rows of a block.

**6.** Method (1) for transmitting a multicarrier signal according to one of Claims 3 to 5, in which the number of slots reserved for the symbols of the stream coded with the code of smallest rate is greater than the numbers of slots remaining for the symbols of the stream coded with the code of largest rate.

**7.** Transmitter (EM) of a multicarrier signal intended for a system with $N_t$ transmission antennas ($TX_1$,..., $TX_{Nt}$), where Nt is greater than or equal to two, Nr reception antennas ($RX_1$,...,$RX_{Nr}$), where Nr is greater than or equal to one, said signal being composed of symbols and said system being of the type implementing a distribution of symbols before transmission according to a time frequency plan and implementing a modulation OFDM/OQAM, said transmitter being **characterized by**:

- a space time coder of real type with coding matrix *Nt x N* and of rate Nc/N which are determined, designed to distribute symbols over blocks of determined size $n_t.n_f$ with $n_t \geq 3$ and $n_f \geq 3$ and to generate Nt coded sequences of N blocks of symbols of an input sequence of Nc blocks of symbols.

**8.** Transmitter (EM) of a multicarrier signal according to Claim 7 furthermore comprising:

- a module adapted for determining a size $n_t.n_f$ of time frequency blocks taking account of at least one of the two estimations between a coherence time and a coherence band of a propagation channel for the multicarrier signal.

**9.** Method for receiving a multicarrier signal intended to be implemented by a system with $N_t$ transmission antennas ($TX_1$,..., $TX_{Nt}$), where Nt is greater than or equal to two, Nr reception antennas ($RX_1$,...,$RX_{Nr}$), where Nr is greater than or equal to one, said signal being composed of symbols and the system implementing a distribution of symbols before transmission according to a time frequency plan and implementing a modulation OFDM/OQAM, comprising the step:

- of space time decoding by a decoder inverse to a space time coder with coding matrix *Nt x N* and of rate Nc/N which are determined so as to generate Nt coded sequences of N blocks of symbols of an input sequence of Nc blocks of symbols of size $n_t.n_f$ with $n_t \geq 3$ and $n_f \geq 3$, the size $n_t.n_f$ taking account of at least one of the two estimations between a coherence time and a coherence band of a propagation channel for the multicarrier signal, so as to obtain estimated values of the symbols of the Nc blocks by using values of the coefficients of the propagation channel for the multicarrier signal transmitted which are assumed to be constant over at least the duration $n_t$ or the band $n_f$.

10. Receiver (RE) of a multicarrier signal intended for a system with $N_t$ transmission antennas ($TX_1,..., TX_{Nt}$), where Nt is greater than or equal to two, Nr reception antennas ($RX_1,...,RX_{Nr}$), where Nr is greater than or equal to one, said signal being composed of symbols and said system being of the type implementing a distribution of symbols before transmission according to a time frequency plan and implementing a modulation OFDM/OQAM, said receiver being **characterized by**:

- an OFDM/OQAM demodulation module,
- a module adapted for space time decoding by a decoder inverse to a space time coder of real type with coding matrix *Nt x N* and of rate Nc/N which are determined so as to generate Nt coded sequences of N blocks of symbols of an input sequence of Nc blocks of symbols of size $n_t.n_f$ with $n_t \geq 3$ and $n_f \geq 3$, the size $n_t.n_f$ taking account of at least one of the two estimations between a coherence time and a coherence band of a propagation channel for the multicarrier signal, so as to obtain estimated values of the symbols of the Nc blocks by using coefficients of the propagation channel which are assumed to be constant over at least the duration $n_t$ or the band $n_f$.

11. Multi-antenna system (SY) **characterized in that** it comprises a transmitter (EM) according to Claim 7 and a receiver (RE) according to Claim 10.

12. Computer program on an information medium, said program comprising program instructions adapted to the implementation of a transmission method (1) according to any one of Claims 1 to 6, when said program is loaded into and executed in a transmitter (EM).

13. Information medium comprising program instructions adapted to the implementation of a transmission method (1) according to any one of Claims 1 to 6, when said program is loaded into and executed in a transmitter (EM).

14. Computer program on an information medium, said program comprising program instructions adapted to the implementation of a reception method according to Claim 9, when said program is loaded into and executed in a receiver (RE).

15. Information medium comprising program instructions adapted to the implementation of a reception method according to Claim 9, when said program is loaded into and executed in a receiver (RE).

**Fig. 1**

**Fig. 2**

**Fig. 3**

**Fig. 4**

Fig. 5

Fig. 6

Fig. 7

Fig. 8

**Fig. 9**

**Fig. 10**

**Fig. 11**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2733869

**Littérature non-brevet citée dans la description**

- **ALAMOUTI.** A Simple Transmit Diversity Technique for Wireless Communications. *IEEE J. Sel. Areas Comm.,* 1998, vol. 16 (8), 1451-1458